# EUROPÄISCHE PATENTSCHRIFT

(11) **EP 0 874 598 B1**
(45) Veröffentlichungstag und Bekanntmachung des Hinweises auf die Patenterteilung: **08.12.1999**
(21) Anmeldenummer: 97901564.1
(22) Anmeldetag: 20.01.1997
(51) Int. Cl.: A61C 13/00, A61C 9/00

(54) **HALTEVORRICHTUNG ZUR HERSTELLUNG VON ZAHNBRÜCKEN UND HERSTELLUNGSVERFAHREN ZUM HERSTELLEN VON ZAHNBRÜCKEN**
HOLDING DEVICE FOR MANUFACTURE OF DENTAL BRIDGES AND MANUFACTURING PROCESS FOR MANUFACTURE OF DENTAL BRIDGES
DISPOSITIF DE MAINTIEN POUR LA FABRICATION DE PONTS DENTAIRES ET PROCEDE DE FABRICATION DE PONTS DENTAIRES

(30) Priorität: 19.01.1996 DE 19601894
(43) Veröffentlichungstag der Anmeldung: 04.11.1998
(73) Patentinhaber: Cicchetti, Biagio, 75100 Matera (IT)
(72) Erfinder: Cicchetti, Biagio, 75100 Matera (IT)
(74) Vertreter: Hertel, Werner, Dipl.-Phys.
(86) Internationale Anmeldenummer: EP9700253
(87) Internationale Veröffentlichungsnummer: WO9725934

(56) Entgegenhaltungen:
- DE-U- 8 600 632

## Beschreibung

Die vorliegende Erfindung betrifft eine Haltevorrichtung zur Herstellung von Zahnbrücken oder zum Verbinden von benachbarten Zahnkronen bzw. Onlays bzw. Inlays, deren Verwendung zur Herstellung von Zahnbrücken und/oder zum Verbinden von benachbarten Zahnkronen bzw. Onlays bzw. Inlays sowie ein Herstellungsverfahren zum Herstellen von Zahnbrücken und von verbundenen Zahnkronen.

Es ist bekannt Zahnlücken, insbesondere zwischen zwei Zähnen bestehende Zahnlücken, durch einen Zahnersatz den sog. Zahnbrücken zu überbrücken, welche von dem Restgebiß gestützt werden.

Es ist weiterhin bekannt, die Zahnbrücken wie folgt herzustellen:
A. Es werden negative Abdrücke der einzelnen Brückenpfeiler, d.h. der präparierten, insbesondere im wesentlichen kegelstumpfartig geschliffenen Zähnen angefertigt. Dies wird insbesondere mit einer silikonartigen Masse bzw. Flüssigkeit (z.B. CAPSIL® von Leach & Dillon, Attleboro MA 02763 USA) durchgeführt. Die negativen Abdrücke können hierbei direkt am Patienten oder an einem vom Zahnarzt angefertigten Modell aus Gips des betreffenden Zahnabschnittes des Patienten angefertigt werden.
B. Es wird ein positiver Abdruck der einzelnen Brückenpfeiler des negativen Ausdrucks aus einem feuerfesten Material hergestellt. Hierzu wird eine erstarrungsfähige Masse bzw. Flüssigkeit (z.B. CAPVEST® von Leach & Dillon) in den negativen Abdruck eingefüllt, ausgehärtet und thermischem Zykeln ausgesetzt, um die Masse zu sintern, z.B. durch Erhitzen auf 700°C für 10 min und dann auf 1075°C für 4 min.
   Das feuerfeste Material kann aus einer phosphatgebundenen Einbettmasse gebildet werden. Die phosphatgebundene Einbettmasse enthält im Pulver von Metalloxid, meist Magnesiumoxid, Phosphate wie Ammoniumdihydrogenphosphat (NH₄H₂PO₄) und expandierende Quarzmodifikationen. Bei Zutritt von Wasser werden beide Wasserstoffatome durch das Magnesium ersetzt und es entsteht das Salz der Phosphorsäure. Bei der Kristallisation nimmt dieses Salz 6 H₂O als Kristallwasser auf. Bei 200°-250°C entweicht das Kristallwasser, bei etwa 300°C verliert das NH₄MgPO₄ Ammoniak (NH₃). Es entsteht somit glühbeständiges und bindendes Magnesiumpyrophosphat (Mg₂P₂O₇).
C. Auftragen bzw. Anwenden einer Substanz (z.B. "CAPTEK® adesivo" von Leach & Dillon) auf das feuerfeste Material, um das nachfolgende Auftragen der Legierung für die Kronen zu erleichtern.
D. Aufbringen einer Grundstruktur für die Kronen auf das insbesondere behandelte, feuerfeste Material. Die Grundstruktur kann insbesondere eine Au-Pt-Pd-Ag-Legierung (z.B. CAPTEK P® von Leach & Dillon) umfassen, welche sich unter dem Mikroskop in Form von unterschiedlich großen Splitter darstellt, die insbesondere durch ein silikonartiges, in der Elektronikindustrie verwendetes Material gebunden sind. Die Legierung kann in Plättchen geformt sein, welche je nach Anwendungsbereich unterschiedliche Dicken aufweisen können (z.B. 0,25 mm für vordere Zähne und 0,35 mm für hintere Zähne wie Molaren und Prämolaren). Es wird beim Aufbringen gewährleistet, daß die Grundstruktur in engem Kontakt auf dem insbesondere behandelten, feuerfesten Material aufliegt. Die Form der Grundstruktur kann durch thermisches Zykeln stabilisiert werden, z.B. bei 1075°C für 4 min. Es muß jedoch noch keine vollkommene Schmelzung bzw. Fusion der Grundstruktur stattfinden, sondern die Splitter können angeschmolzen werden, so daß die Grundstruktur porös sein kann.
E. Nachfolgend wird ein Kapillarisierungsmaterial bzw. -mittel aufgebracht.
   Dieses Kapillarisierungsmaterial (z.B. CAPTEK G® von Leach & Dillon) umfaßt insbesondere eine auf Au basierende Legierung mit Hart- bzw. Härtermetallen bzw. Metallen zur Härtung der Legierung, welche sich unter dem Mikroskop in Form verschieden großer Kugeln darstellt, insbesondere nachdem das Bindemittel entfernt wurde und das Mittel atomisiert wurde (und zwar durch Schmelzen in Umgebung aus inertem Gas z.B. Ar und durch Versprühen). Das Kapillarisierungsmaterial kann in Plättchen geformt sein, welche je nach Anwendungsbereich unterschiedliche Dicken aufweisen können. Das Kapillarisierungsmaterial soll die Freiräume der Grundstruktur auffüllen bzw. sättigen. Das Kapillarisierungsmaterial bildet eine Oberflächenschicht, welche im Mittel insbesondere etwa 5 µm beträgt, jedoch je nach Auftragung auch bis 100 µm betragen kann. Der Kapillarisierungsvorgang kann weiterhin auch thermische Zykel umfassen.
   Die Menge an Kapillarisierungsmaterial wird vorteilhafterweise etwa gleich der Menge an Grundstrukturmaterial gewählt, um eine gute Kapillarisierung zu erzielen.
F. Mechanisches Trennen der Krone von dem feuerfesten Material und Entfernen von Resten des feuerfesten Materials durch Kratzen und/oder Reiben und/oder durch Benutzung von HCl z.B. mit einer Verdünnung von 20%.
G. Auf dem positiven "Masterabdruck" z.B. aus Gips, welcher von den Brükkenpfeilern angefertigt wurde, werden die Kronen dann insbesondere durch Fräsen angepaßt, um den Sitz bzw. die Anpassung der Kronen an die Brückenpfeiler zu verbessern.
   Es wird nunmehr die Brücke zwischen den mit Kronen versehenen Brückenpfeilern gebildet.
F. Es wird ein Zwischenelement bzw. Zwischenglied ausgesucht, dessen Brückenkörper, Brückenanker (Verbindungselemente des Zwischenelementes) und Größe für die Anwendung geeignet sind. Das Zwischenelement kann eine Legierung auf Pd-Basis mit zwei Prozent Au-Anteil umfassen.
G. Anpassung des Zwischenelementes im Raum des fehlenden Zahns, wobei insbesondere die Brückenanker an die Kronen angepaßt werden.
H. Befestigung des Zwischenelementes an den Kronen mittels eines Klebematerials, z. B. Wachs.
I. Herstellen eines weiteren positiven Abgusses aus feuerfesten Material, in dem die relative Position der Brückenpfeiler, d.h. der vorbereiteten Zähne, wiedergegeben sind. Das feuerfeste material ist insbesondere frei von Ammoniumsulphat.
J. Übertragen der verbundenen Kronen und Zwischenelement auf den weiteren positiven Abguß, um die relativen Positionen der Kronen und des Zwischenelementes während deren endgültiger Verbindung (z.B. durch Schweißen und/oder durch Verbindungsmaterialien) festgelegt werden.
K. Entfernen des Klebematerials z.B. durch Waschen.
L. Verbinden der Kronen und des Zwischenelementes untereinander z.B. mittels eines Verbindungsmaterials (z.B. CAPCON® von Leach & Dillon), welches eine ähnliche Zusammensetzung wie das Material für die Grundstruktur (z.B. CAPTEK P® von Leach & Dillon) aufweist. Das Verbindungsmaterial kann auch ein Antioxidationsfluxmittel umfassen, welches die Oxydation des Verbindungsmaterials während dessen Erhitzung verhindert.
M. Ausfüllen der Brücke mit einem Füllmaterial. Das Füllmaterial (z.B. CAPFIL® von Leach & Dillon) kann eine Goldlegierung umfassen, welche eine ähnliche Zusammensetzung wie das Kapillarisierungsmaterial (z.B. CAPTEK G®) und einen Schmelzpunkt von etwa 1075°C aufweist.
N. Endgültige Verschweißung des Zwischenelementes mit den Kronen zur Herstellung der Brücke. Die Verschweißung erfolgt z.B. durch thermisches Zykeln ähnlich zu den vorherigen Schritten.
O. Entfernung der Brücke von dem feuerfesten Material, dessen Überprüfung an dem Masterabguß und Auftragen einer äußersten Keramikschicht.

Weiterhin ist es bekannt (B. Romano et al, "Società Lucana di medicina e chirurgia", Atti 1989-1990, Seiten 389-398), ein Material mit Handelsnamen CEPLATEC® bzw. CEPLATEC Crown Bridge System® (Handelsname in Europa, insbesondere Italien) bzw. Renaissance® (Handelsname in USA und Japan) zu benutzen.

Diese bekannte Herstellungsverfahren für Brücken haben jedoch den Nachteil, daß sie wegen der großen Anzahl von Schritten etwa vier Stunden benötigen. Im ersten Verfahren unterliegt weiterhin der im Schritt I. hergestellte weitere positive Abguß aus feuerfestem Material, in dem die relative Position der Brückenpfeiler (d.h. der vorbereiteten Zähne) wiedergegeben sind, während der Verschweißung großen thermischen Dilatationen bzw. Ausdehnungen, welche die Genauigkeit der Endbrücke beeinträchtigen. Weiterhin unterliegt jeder Herstellungsschritt Ungenauigkeiten und möglichen Fehlern, so daß die hergestellte Brücke fehlerbehaftet sein kann.

Es ist daher Aufgabe der vorliegenden Erfindung eine Haltevorrichtung zur Herstellung von Zahnbrücken oder zum Verbinden von benachbarten Zahnkronen bzw. Onlays bzw. Inlays, deren Verwendung zur Herstellung von Zahnbrücken und/oder zum Verbinden von benachbarten Zahnkronen bzw. Onlays bzw. Inlays sowie ein Herstellungsverfahren zum Herstellen von Zahnbrücken und von verbundenen Zahnkronen bereitzustellen, welche eine schnelle und genaue Herstellung der Brücken bzw. der Verbindung von benachbarten Kronen zuläßt.

Diese Aufgabe wird erfindgungsgemäß durch eine Haltevorrichtung gemäß Anspruch 1, deren Verwendung gemäß Anspruch 8 und durch ein Herstellungsverfahren gemäß Anspruch 9 oder 10 gelöst. Bevorzugte Ausführungsformen der vorliegenden Erfindung sind Gegenstand der Unteransprüche.

Erfindungsgemäß umfaßt eine Haltevorrichtung zur Herstellung von Zahnbrücken oder zum Verbinden von benachbarten Zahnkronen bzw. Onlays bzw. Inlays einen Hauptteil und mindestens zwei Tragarme, welche sich von dem Hauptteil erstrecken, wobei jeder Tragarm zumindest ein Tragelement umfaßt, welches sich von dem Tragarm unter einem vorbestimmten bzw. vorbestimmbaren Winkel aus der durch die Tragarme bestimmten Fläche erstreckt.

Die erfindungsgemäße Haltevorrichtung vermeidet somit das Problem der thermischen Ausdehnungen der feuerfesten Materialien während der Durchführung von Verbindungen z.B. Verschweißungen bzw. Lötungen, und zwar sowohl primäre Hartlötungen (bei Temperaturen von etwa 1040° bis 1120°C) als auch sekundäre Hartlötungen (bei Temperaturen von etwa 750° bis 850°C).

Es werden somit insbesondere bei Verschweißungen große thermische Dilatationen weitgehend vermieden, und es ist nicht mehr notwendig die einzelnen Abgüsse von Brückenpfeilern zu trennen, um thermische Dilatationen zu vermeiden, und einen weiteren Abguß anzufertigen, in dem die relativen Positionen der Brückenpfeilern wiedergegeben sind, da die erfindugsgemäße Halterung einerseits thermische Dilatationen des feuerfesten Materials stark verringert, da die Gesamtmasse des feuerfesten Material verringert wird und die relativen Positionen durch die Halterung fixiert werden.

Gemäß einer bevorzugten Ausführungsform der Erfindung weisen die Tragarme zumindest benachbart zu den Tragelementen im wesentlichen einen Querschnitt auf, dessen begrenzende Kurve von einem Kreis abweicht, wobei die begrenzende Kurve des Querschnitts bevorzugt eine Wulstform bzw. abgerundete T-Form bzw. "Birnenform" aufweist bzw. einer abgerundeten Überlagerung zweier im wesentlichen senkrecht zueinander ausgerichteten Ellipsen entspricht, und insbesondere zumindest zwei Krümmungsumkehrpunkte aufweist.

Durch diese Ausgestaltung vermeidet man, daß Haarrisse bzw. Spannungen bzw. Stress durch Ecken bzw. Kanten an den Tragelementen in dem feuerfesten Material entstehen, wodurch die Genauigkeit der Positionierung des Abgusses und die gute Wiedergabe des Abdruck- bzw. Abgußmusters gewährleistet werden. Durch die Wulstform bzw. durch die abgerundete T-Form wird weiterhin eine gute Starrheit gewährleistet, wodurch sich die Tragelemente z.B. während des Verschweißens des Zwischenelementes mit den Kronen nicht bewegen und eine gute Verarbeitungsgenauigkeit gewährleisten.

Bevorzugt verjüngen sich die Tragelemente von den Tragarmen weg, d.h. deren Querschnittsfläche nimmt ab, wobei die Tragelemente bevorzugt im wesentlichen kegelstumpfartig ausgebildet sind. Es ist somit vorteilhaft möglich, das feuerfeste Material bzw. Abguß von dem einzelnen Tragelement zu entfernen, z.B. zur weiteren Anpassung bzw. anderweitigen Verwendung.

Weiterhin bevorzugt können die Tragelemente jeweils zumindest eine Rückhalteeinrichtung umfassen, wobei die Rückhalteeinrichtung bevorzugt eine Durchgangsbohrung aufweist und insbesondere ringförmig ausgebildet ist oder wobei die Rückhalteeinrichtung bevorzugt kugelförmig ausgebildet ist.

Die Rückhalteeinrichtung verhindert somit vorteilhaft, daß das feuerfeste Material sich von den Tragelementen lösen kann.

Gemäß einer weiteren Ausführungsform, verlaufen die Tragarme im wesentlichen parallel zueinander oder sind unter einem Winkel, insbesondere senkrecht zu einem insbesondere bogenförmigen Verbindungselement angeordnet, welches die Tragarme verbindet, wobei das bogenförmige Verbindungselement zumindest teilweise annähernd dem bogenförmigen Verlauf von Zähnen im Kiefer entspricht. Es kann somit eine vorteilhaft Anpassung an den negativen Abdruck bzw. Abguß, insbesondere an den Verlauf der Zähne erfolgen.

Bevorzugt ist das Verbindungselement einstückig mit den Tragarmen ausgebildet. Es wird somit eine einfache und robuste Konstruktion ermöglicht.

Besonders bevorzugt sind zwei benachbarte Tragelemente um einen Abstand beabstandet, welcher im Bereich von etwa 6 bis etwa 12 mm, bevorzugt von etwa 8 bis 10 mm liegt, und am bevorzugtesten etwa 9 mm beträgt, und zwar insbesondere entsprechend dem mittleren Abstand zwischen benachbarten Zähnen.

Weiterhin bevorzugt ist an einem oder mehreren Tragarmen ein Lagervorsprung ausgebildet. Hierdurch wird die Stabilisierung der Haltevorrichtung insbesondere während des Einfüllens einer Ausgußmasse in den Zwischenraum zwischen negativem Abdruck und den Tragelementen gewährleistet.

Besonders bevorzugt ist die Haltevorrichtung aus einem Material, insbesondere einem Metall bzw. einer Legierung gebildet, dessen Schmelzpunkt oberhalb von etwa 1100°C, bevorzugt oberhalb von etwa 1150°C, am bevorzugtesten oberhalb von etwa 1200°C liegt und/oder das einen niedrigen thermischen Ausdehnungskoeffizienten bzw. Wärmeausdehnung aufweist. Somit wird die Haltevorrichtung während der Verschweißung nicht beschädigt und erlaubt eine gute relative Positionierung der Kronen und des Zwischenelementes.

Weiterhin bevorzugt erstrecken sich die Tragarme um eine Länge, welche im Bereich von etwa 10 bis 30 mm, bevorzugt von etwa 12 bis 20 mm, besonders bevorzugt von etwa 14 bis etwa 16 mm liegt, und zwar gemessen von etwa der Mitte des Tragelementes bis etwa zur Mitte des Verbindungselementes. Somit wird eine gute Stabilität und eine geringe thermische Ausdehnung gewährleistet.

Besonders bevorzugt sind die Tragarme bevorzugt einstückig ausgebildet sind, wobei jeder Tragarm bevorzugt einstückig mit dem entsprechenden Tragelement ausgebildet ist. Es wird somit eine einfache und stabile Konstruktion ermöglicht.

Die Erfindung stellt weiterhin die Verwendung der erfindungsgemäßen Haltevorrichtung bereit zur Herstellung von Zahnbrücken und/oder zum Verbinden von benachbarten Zahnkronen bzw. Onlays bzw. Inlays, insbesondere zum aufeinander Abstützen von benachbarten Zähnen.

Die Verwendung der erfindungsgemäßen Haltevorrichtung ist sowohl für die vorangehend beschriebene CAPTEK®-Technik möglich, wie auch für die Techniken welche OPTEK®, CEPLATEC® bzw. CEPLATEC Crown Bridge System® (Handelsname in Europa, insbesondere Italien) bzw. Renaissance® (Handelsname in USA und Japan) benutzen.

Die Erfindung ist insbesondere auch für Freiendbrücken sowie fortlaufende Brücken verwendbar.

Weiterhin stellt die Erfindung ein Herstellungsverfahren bereit zum Herstellen von Zahnbrücken, welches folgende Schritte umfaßt:
a) Bilden eines negativen Abdruckes eines Teilbereiches des Gebisses bzw. Restgebisses;
b) Anordnen von zumindest zwei Tragelementen einer erfindungsgemäßen Haltevorrichtung in den den Zähnen bzw. Zahnlücken entsprechenden Abschnitten, insbesondere den Hohlräumen, des negativen Abdruckes;
c) Ausfüllen von Zwischenräumen zwischen dem negativen Abdruck und den Tragelementen mit einem Füllmaterial aus einem erstarrungsfähigen, im erstarrtem Zustand feuerfesten Material, insbesondere mit einer phosphatgebundenen Einbettmasse (z.B. CAPVEST®), zum Bilden eines positiven Abdruckes des Teilbereiches des Gebisses;
d) Aushärten des Füllmaterials;
e) Entfernen der Tragelementen und des daran verbundenen Füllmaterials d.h. des positiven Abdruckes von dem negativen Abdruck;
f) Anpassen eines für die Brücke zu verwendenden Zwischenelementes bzw. Zwischengliedes an Brückenpfeiler des positiven Abdruckes;
g) Befestigen des Zwischenelementes auf dem positiven Abdruck eines zahnlosen Sattels bzw. Sessels (italienisch "sella edentula") zwischen den Brückenpfeilern, insbesondere an einem Gipsabdruck des Teilbereiches des Gebisses z.B. dem Masterabdruck aus Gips;.
h) Bilden von Grundschichten der Kronen auf den positiven Abdrücken der Brückenpfeiler, insbesondere mit einer Grundstruktur aus einer Goldlegierung (z.B. CAPTEK P®);
i) Bilden der Kronen auf den Abdrücken der Brückenpfeiler, insbesondere bei entferntem Zwischenelement (z.B. mittels CAPCON®, CAPTEK G®, CAPFIL®)
j) erneutes Anordnen des Zwischenelementes zwischen den mit Kronen versehenen positiven Abdrücken der Brückenpfeiler;
k) Verbinden des Zwischenelementes mit den Kronen (z.B. mittels CAPTEK G®, CAPCON®, CAPFIL®)
l) Vervollständigen der Kronen und der Brücke, insbesondere durch eine Keramikbeschichtung.

Das erfindungsgemäße Herstellungsverfahren weist vorteilhaft wenige Schritte zur Herstellung der Brücke auf, wodurch die für die Herstellung notwendige Zeit auf etwa zwei Stunden, entsprechend der Hälfte der Zeit mit dem herkömmlichen Herstellungsverfahren, heruntergesetzt wird, wodurch die Herstellungskosten deutlich reduziert werden. Insbesondere werden die herkömmlichen Schritte der Befestigung des Zwischenelementes mittels Wachs (Schritt H), des Herstellens eines weiteren positiven Abdruckes und des Übertragens des Brückenrohlings auf den weiteren Abguß (Schritt J) durch das erfindungsgemäße Herstellungsverfahren eliminiert.

Weiterhin bedingt die Herabsetzung der Anzahl der notwendigen Schritte auch eine Verringerung der möglichen Fehler, wodurch der anfallende Ausschuß vorteilhaft reduziert wird. Weiterhin ist mit dem erfindungsgemäßen Herstellungsverfahren eine höhere Herstellungsgenauigkeit möglich.

Gemäß einer bevorzugten Ausführungsform umfaßt das Herstellungsverfahren nach dem Entfernungs schritt e):
e') Auftragen und/oder Aushärten eines silikonartigen Materials auf die feuerfeste Füllmasse (z.B. CAPTEK® adesivo) und/oder
e'') Befestigen einer Wachsschicht entsprechend einer Dicke der zu bildenden endgültigen Krone, insbesondere an einem Gipsabdruck des Teilbereiches des Gebisses. Bevorzugt wird der Befestigungsschritt g) mittels eines Hartwachses durchgeführt. Weiterhin bevorzugt umfaßt das Herstellungsverfahren nach dem Grundschichtbildungsschritt h):
h') Bilden von Aufnahmen für Verbindungselemente bzw. Brückenanker des Zwischenelementes, welche ein Zwischenelementkörper mit den Brückenpfeiler verbindet, wobei die Aufnahmen zumindest teilweise die Verbindungselemente unten und/oder an den Seiten abstützen.

Weiterhin bevorzugt wird der Zwischenelementverbindungsschritt k) mittels einer Goldlegierung zur Kapillarisierung d.h. zum Sättigen bzw. Füllen der Leerräume durchgeführt, und zwar insbesondere durch thermisches Zykeln.

Weiterhin bevorzugt umfaßt das Herstellungsverfahren nach dem Zwischenelementverbindungsschritt k):
k') Ver- bzw. Ausbessern von Abschlußrändern der Kronen.

Weiterhin stellt die Erfindung ein Herstellungsverfahren bereit zum Herstellen von verbundenen Zahnkronen bzw. Onlays bzw. Inlays, welches folgende Schritte umfaßt:
a) Bilden eines negativen Abdruckes eines Teilbereiches des Gebisses bzw. Restgebisses;
b) Anordnen von zumindest zwei Tragelementen einer erfindungsgemäßen Haltevorrichtung in den den Zähnen bzw. Zahnlücken entsprechenden Abschnitten, insbesondere Hohlräumen des negativen Abdruckes;
c) Ausfüllen von Zwischenräumen zwischen dem negativen Abdruck und den Tragelementen mit einem Füllmaterial aus einem erstarrungsfähigen, im erstarrtem Zustand feuerfesten Material, insbesondere mit einer phosphatgebundenen Einbettmasse (z.B. CAPVEST®), zum Bilden eines positiven Abdruckes des Teilbereiches des Gebisses;
d) Aushärten des Füllmaterials;
e) Entfernen der Tragelementen und des daran verbundenen Füllmaterials d.h. des positiven Abdruckes von dem negativen Abdruck;
f) Bilden von Grundschichten der Kronen auf den positiven Abdrücken der Brückenpfeiler, insbesondere mit einer Grundstruktur aus einer Goldlegierung (z.B. CAPTEK P®)
g) Bilden der Kronen auf den Abdrücken der Brückenpfeiler (z.B. mittels CAPCON®, CAPTEK G®, CAPFIL®)
h) Verbinden des Kronen, insbesondere durch Schweißen (z.B. mittels CAPTEK G®, CAPCON®, CAPFIL®)
i) Vervollständigen der Kronen und der Brücke, insbesondere durch eine Keramikbeschichtung.

Gemäß einer bevorzugten Ausführungsform der vorliegenden Erfindung umfaßt der Aushärtungsschritt d) einen Schritt der Entfernung von Ammoniak aus dem Füllmaterial.

Weitere Merkmale und Vorteile der vorliegenden Erfindung werden ersichtlich werden aus der folgenden, beispielhaften Beschreibung bevorzugter Ausführungsformen, und zwar in bezug auf die beigefügte Zeichnung.
- Fig. 1(A): ist eine Draufsicht auf eine erste Ausführungsform der erfindungsgemäßen Haltevorrichtung;
- Fig. 1(B): ist eine Schnittansicht entlang der Linie A-A in Fig. 1(A);
- Fig. 1(C): ist eine Schnittansicht entlang der Linie B-B in Fig. 1(A);
- Fig. 2: ist eine perspektivische Ansicht der in Fig. 1 gezeigten Ausführungsform, wobei die Tragelemente nicht dargestellt sind; und
- Fig. 3: ist eine Draufsicht auf eine zweite Ausführungsform der vorliegenden Erfindung.

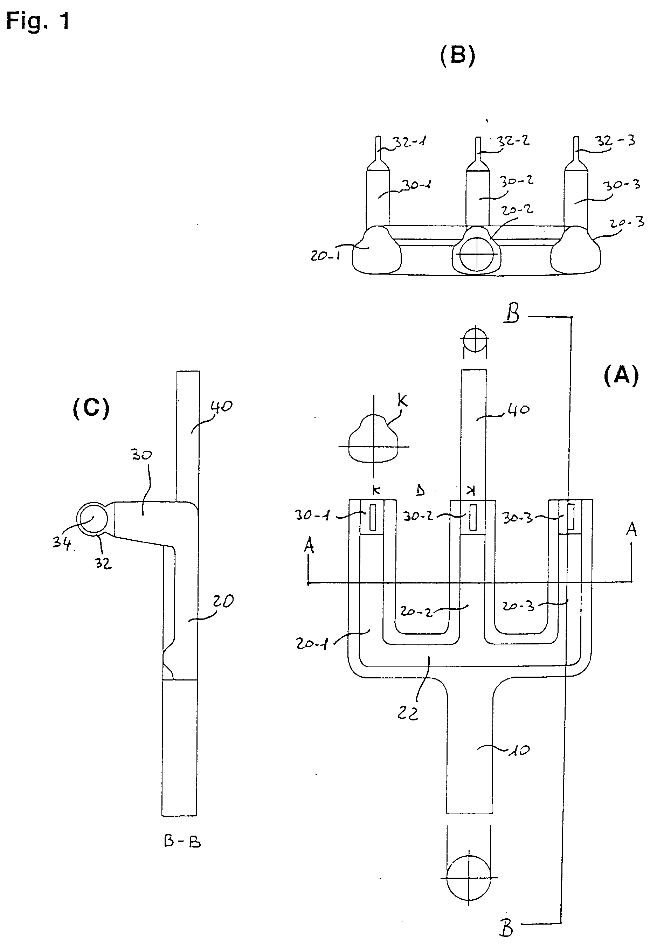

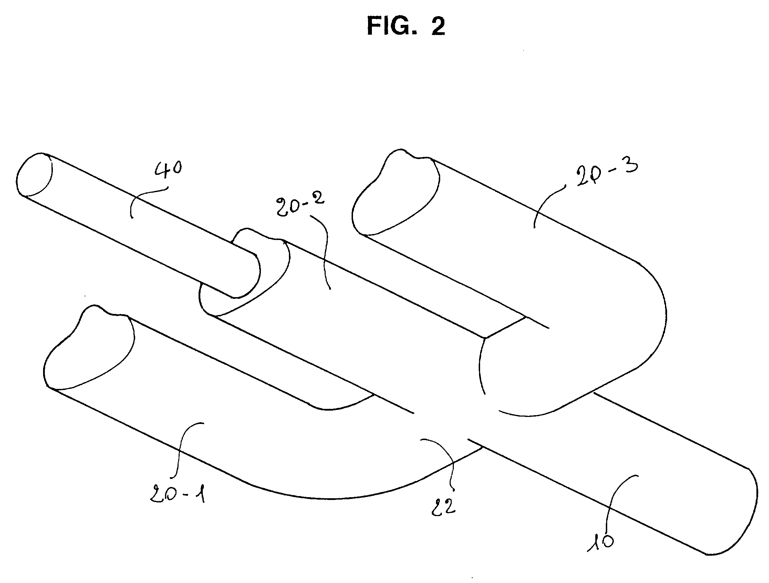

Die in Figuren 1 und 2 gezeigte erste Ausführungsform der erfindungsgemäßen Haltevorrichtung umfaßt einen Hauptteil 10, an welchem drei Tragarme 20-1, 20-2, 20-3 befestigt sind, wobei die Haltevorrichtung insbesondere die Form einer Harke bzw. dreizinkigen Gabel aufweist. Die Tragarme 20-1, 20-2, 20-3 erstrecken sich parallel zueinander und sind durch ein Verbindungselement 22 an einem ihrer Enden miteinander verbunden, wobei die Tragarme 20 jeweils etwa senkrecht auf die Längsachse des Verbindungselementes 22 angeordnet sind.

Die Tragarme 20 und das Verbindungselement 22 weisen eine "birnen"- bzw. wulstförmigen Querschnitt auf, welcher mit der Kurve K in Fig. 1(A) dargestellt ist. Der Querschnitt weicht von einem kreisrunden Querschnitt ab und weist jedoch keine Kanten bzw. Ecken auf, wodurch Risse bzw. Spannungen bzw. Stress in einem aufzutragenden feuerfesten bzw. hitzebeständigem bzw. unschmelzbarem Material (italienisch "materiale refrattario") im Inneren und an den Grenzflächen vermieden werden können, wobei die Steifigkeit höher ist als bei einem kreisrunden Querschnitt. Falls Risse bzw. Haarrisse in dem feuerfesten Material nicht relevant sind, ist es vorteilhaft den Querschnitt eckig z.B. dreieck-, rechteck-, quadratisch und/oder T-förmig auszugestalten (nicht gezeigt), da diese Querschnittkonfigurationen eine bessere Steifigkeit, insbesondere geringere Elastizität ergeben.

Der Tragarm 10 weist, wie in Fig. 1(A) gezeigt, einen kreisrunden Querschnitt auf, welcher jedoch nicht notwendigerweise darauf beschränkt sein muß.

An den Endbereichen jedes Tragarmes 20 ist ein Halte- bzw. Tragelement 30-1, 30-2, 30-3 angeordnet zum Halten bzw. Tragen von feuerfesten Material. Die Tragelemente 30 sind einstückig mit dem entsprechenden Tragarm 20 ausgebildet und erstrecken sich im wesentlichen senkrecht zu der Längsachse des entsprechenden Tragarmes 20. Die Tragelemente 30 sind parallel zueinander angeordnet und verjüngen sich in einer Richtung weg von dem jeweiligen Tragarm 20. Diese sich verjüngende bzw. zulaufende Formgebung erlaubt ein leichtes Entfernen von an dieser befestigtem feuerfestem Material.

Jedes Tragelement 30 weist eine Rückhalteeinrichtung 32 auf, welche mit einer Durchgangsbohrung 34 versehen ist. Die Rückhalteeinrichtung 32 weist insbesondere ringförmige Gestalt auf, wobei die Durchgangsbohrung 34 senkrecht zu der Vorsprungsrichtung jedes Tragelementes 30 angeordnet ist. Die Rückhalteeinrichtungen 32 verhindern ein leichtes Lösen des feuerfesten Materials von den Tragelementen 30 und können jedoch, wenn ein leichtes Lösen erwünscht ist, entfernt oder mittels Wachs oder dgl. geschlossen werden. Die Rückhalteeinrichtungen 32 können auch (nicht gezeigt) eine kugelförmige Gestalt aufweisen.

An dem Tragarm 20-2 ist ein Lagervorsprung bzw. eine Lagerhalterung 40 vorgesehen, welcher sich in Längsrichtung des Tragarmes 20-2 von diesem vorspringend erstreckt und zur besseren Lagerung bzw. Halterung der Haltevorrichtung dient. Der Lagervorsprung 40 dient insbesondere zur Festlegung der Haltevorrichtung bezüglich eines negativen Abdruckes eines Gebisses während dem Ausfüllen bzw. Ausgießen bzw. Anordnen von Zwischenräumen zwischen den Tragelementen 30 und dem negativen Abdruck mit feuerfesten Material.

In einer nicht gezeigten Ausführungsform sind an mehreren Tragarmen ein oder mehrere Lagervorsprünge vorgesehen.

Der Abstand D zwischen benachbarten Tragarmen entspricht dem mittleren Abstand von benachbarten Zähnen und kann je nach Anwendung variieren, wobei der Abstand D im Bereich von etwa 6 bis etwa 14 mm, bevorzugt von etwa 8 bis 12 mm liegt, und am bevorzugtesten etwa 9 bis 10 mm beträgt.

Die Länge L der Tragarme 20, und zwar gemessen von etwa der Mitte der Tragelemente 30 bis zu der Mitte bzw. Mittelachse des Verbindungselementes 22 soll derart klein sein, daß die Stabilität der Tragarme 20 nicht zu stark verringert wird und daß die thermischen Ausdehnungseffekte, insbesondere die Längenausdehnung, nicht zu groß wird. Die Länge L beträgt bevorzugt etwa 10 bis 30 mm, bevorzugt etwa 12 bis 20 mm, besonders bevorzugt etwa 14 bis etwa 16 mm.

Die Haltevorrichtung ist aus einem Material gebildet, welches bei hohen Temperaturen bis etwa 1100°C nicht schmilzt und eine geringe thermische Dilatation bzw. Ausdehnung aufweist. Besonders geeignet sind Metallegierungen, insbesondere Superlegierungen, z.B. NIMONIC 105®, welche 73,5% Ni, 15% Co, 5% Mo, 4,7% Al, 1,2% Ti und 0,5% Cr aufweist. Metallegierungen weisen einen thermischen Ausdehnungskoeffizienten von etwa 15·10⁻⁶ 1/K auf und Superlegierungen von etwa 10·10⁻⁶ 1/K. Weiterhin ist es vorteilhaft wenn das Material eine geringe Oberflächenoxidation, insbesondere bei Hitzeeinstrahlung, aufweist.

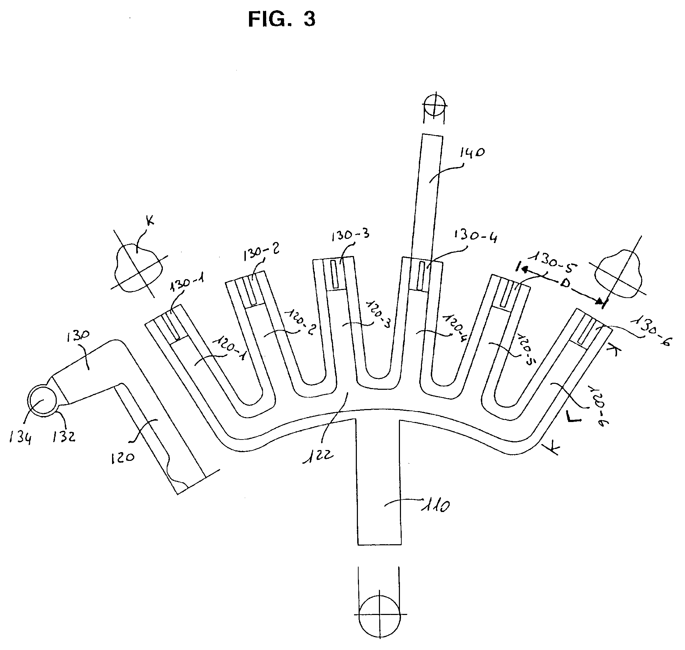

Die in Fig. 3 gezeigte Ausführungsform der erfindungsgemäßen Halteeinrichtung weist sechs Tragarme 120-1 bis 120-6 auf, welche jeweils ein entsprechendes Tragelement 130-1 bis 130-6 aufweisen. Die Tragarme 120 sind an einem Verbindungselement 122 angeordnet, welches bogenförmig ausgebildet ist, und zwar bevorzugt entsprechend dem mittleren Bogen der Zähne am Ober- und/oder Unterkiefer. Diese Halteeinrichtung ist insbesondere für die Herstellung von Brücken und/oder Kronen geeignet, welche einen größeren Zahnbereich erfassen (z.B. eine fortlaufende Brücke).

Gemäß einer weiteren (nicht gezeigte) Ausführungsform können auch nur zwei Tragarme oder bis zu zwölf Tragarme vorgesehen werden. Der Hauptteil 10 bzw. 110 und das Verbindungselement 22 bzw. 122 können ein und dasselbe sein.

Im folgenden wird eine Ausführungsform des erfindungsgemäßen Herstellungsverfahrens beispielsweise anhand der CAPTEK P®-Technik erläutert. Das erfindungsgemäße Herstellungsverfahren kann jedoch auch für andere Techniken angewendet werde, wie die Techniken unter Verwendung von OPTEK®, CEPLATEC® bzw. CEPLATEC Crown Bridge System® (Handelsname in Europa, insbesondere Italien) bzw. Renaissance® (Handelsname in USA und Japan) und dgl., und zwar insbesondere immer dann, wenn die verwendeten Temperaturen etwa 1100°C nicht übersteigen.
a) Bilden eines negativen Abdruckes des Gebisses bzw. Restgebisses, insbesondere durch eine Polyether- oder Silikon-Abdruckmasse oder dgl. z.B. des Siloxan- oder Polyvinylsiloxan-Typs, wobei diese Abdruckmasse in etwa 5 min austrocknet. Alternativ kann auch CAPSlL® verwendet werden, wobei dort die Aushärtungszeit etwa 40 min beträgt.
   Beim Bilden des negativen Abdrucks werden zumindest zwei benachbarte Zähne erfaßt, wodurch die Abstände zwischen den Zähnen z.B. präparierte Brückenpfeiler-Zähne eingehalten bzw. erhalten werden.
b) Anordnen von zumindest zwei Tragelementen 30-1, 30-2, 30-3; 130-1 bis 130-6 einer erfindungsgemäßen Haltevorrichtung in den den Zähnen bzw. Zahnlücken entsprechenden Abschnitten, insbesondere den Hohlräumen, des negativen Abdruckes. Hierbei wird die geeignete Halteeinrichtung entsprechend der Anwendung ausgewählt, insbesondere bezüglich der Anzahl von Tragelementen, Anordnung der Tragelemente usw.. Bevorzugt sollen sich die Tragelemente etwa bei einem mittleren Abschnitt der Hohlräume des negativen Abdrucks befinden, wobei eine Abweichung davon auch möglich sein kann.
   Bei dem Anordnen können in der Abdruckmasse Ausnehmungen gebildet werden, und zwar entsprechend dem Lagervorsprung 40 bzw. 140 und dem Hauptteil 10 bzw. 110 der Haltevorrichtung, um die Halteeinrichtung während des nachfolgenden Ausfüllschrittes raum- und kippfest zu fixieren bzw. zu befestigen.
c) Ausfüllen von Zwischenräumen zwischen dem negativen Abdruck und den Tragelementen 30-1, 30-2, 30-3; 130-1 bis 130-6 mit einem Füllmaterial aus einem erstarrungsfähigen, im erstarrtem Zustand feuerfesten Material, insbesondere mit einer phosphatgebundenen Einbettmasse oder z.B. mit CAPVEST®, zum Bilden eines positiven Abdruckes des Gebisses.
   Insbesondere wird der CAPVEST® mit einer Lösung von mit destilliertem Wasser verdünnten (z.B. 65%) Ammoniumsulphat vermischt, um die Auskristallisierung des CAPVEST® zu bewirken, wobei die Stärke der Verdünnung des CAPVEST® die Expansion des feuerfesten Materials bestimmt.
d) Aushärten des Füllmaterials, insbesondere durch thermisches Zykeln, z.B. 700°C für 10 min und 1075°C für 4 min. Gegebenenfalls Entfernung von Ammoniak aus dem Füllmaterial.
d') Auftragen und/oder Aushärten eines silikonartigen Materials auf die feuerfeste Füllmasse z.B. "CAPTEK® adesivo", um das nachfolgende Auftragen von CAPTEK P® zu erleichtern.
d'') Befestigen einer Wachsschicht entsprechend einer Dicke der zu bildenden endgültigen Krone.
e) Entfernen bzw. Lösen der Tragelemente und des daran verbundenen Füllmaterials d.h. des positiven Abdruckes von dem negativen Abdruck.
   Die positiven Abdrücke der Zähne bzw. der Zahnlücken sind nunmehr and der Haltevorrichtung befestigt, und zwar ein Zahn bzw. eine Lücke an einem Halteelement, wobei die feuerfeste Masse von benachbarten Zähnen bzw. Lücken nicht in Berührung stehen. Somit wird die Ausdehnungsfähigkeit der zusammenhängenden Bereiche von feuerfesten Material stark herabgesetzt, da die Masse jedes zusammenhängenden Bereiches verringert wurde. Weiterhin entsprechen die räumlichen Beziehungen und die Ausrichtung zwischen den einzelnen Abdruckbereichen des positiven Abdruckes denen der Bereiche der Zähne des Patienten bzw. des Gipsabdruckes.
   In dem Bereich des zahnlosen Sattels bzw. Sessels (italienisch "sella edentula") können Vor- und/oder Rücksprünge (z.B. ein Rücksprung in Form eines Kreuzes) am positiven Abdruck vorgesehen werden, welche für die nachfolgende Anordnung eines Zwischenelementes dienlich sein können.
f) Anpassen eines für die Brücke zu verwendenden Zwischenelementes bzw. Zwischengliedes an die Brückenpfeiler des positiven Abdruckes, insbesondere durch Schleifen und/oder Fräsen. Hierbei kann die Dicke der Krone durch Wachsplättchen mit einer Dicke von etwa 0,4 mm simuliert werden.
g) Befestigen des Zwischenelementes auf dem positiven Abdruck eines zahnlosen Sattels bzw. Sessels zwischen den Brückenpfeilern, insbesondere mittels eines Hartwachses durchgeführt wird. Hierbei bilden sich an dem Hartwachs komplementäre Vor- bzw. Rücksprünge, welche den im Schritt d) in dem Bereich des zahnlosen Sattels gebildeten Vor- und/oder Rücksprünge (im oben angegebenen Beispiel ein Vorsprung in Form eines Kreuzes).
h) Bilden von Grundschichten der Kronen auf den positiven Abdrücken der Brückenpfeiler, insbesondere mit einer Grundstruktur aus einer Goldlegierung z.B. aus CAPTEK P®.
h') Bilden von Aufnahmen für Verbindungselemente bzw. Brückenanker des Zwischenelementes, welche ein Zwischenelementkörper mit den Brückenpfeiler verbindet, wobei die Aufnahmen zumindest teilweise die Verbindungselemente unten und/oder an den Seiten abstützen. Die Aufnahmen werden vorzugsweise aus dem gleichen Material wie die Grundschichten der Kronen z.B. CAPTEK P® gebildet.
i) Bilden der Kronen auf den Abdrücken der Brückenpfeiler, insbesondere bei entferntem Zwischenelement. Hierbei werden insbesondere thermische Zykel durchlaufen.
j) erneutes Anordnen des Zwischenelementes zwischen den mit Kronen versehenen positiven Abdrücken der Brückenpfeiler, jedoch ohne Hartwachs. Die Orientierung des Zwischenelementes wird nunmehr durch die Aufnahmen festgelegt bzw. eingehalten bzw. positioniert werden.
k) Verbinden des Zwischenelementes mit den Kronen, z.B. mittels CAPCON®, CAPTEK G®, CAPFIL®, wobei zuerst CAPCON® aufgetragen und durch leichtes Erhöhen der Temperatur getrocknet wird, um das anschließende Auftragen des CAPTEK G® zu erleichtern.
   Es wird mittels einer Goldlegierung z.B. CAPTEK G® die Kapillarisierung d.h. die Sättigung bzw. Füllung der Leerräume der Grundstruktur (z.B. des CAPTEK P®) durchgeführt. Weiterhin wird CAPFIL® aufgetragen, um die Menge von CAPTEK P® und CAPCON® zu kompensieren. Nachfolgend wird thermisches gezykelt, und zwar wie in den vorherigen Schritten.
k') Ver- bzw. Ausbessern von Abschlußrändern der Kronen, insbesondere Anpassen der Kronen an den Masterabdruck aus Gips.
l) Vervollständigen der Kronen und der Brücke, insbesondere durch eine Keramikbeschichtung, wobei insbesondere folgende Schritte durchgeführt werden:
   die Kronen und das Zwischenelement werden insbesondere mit Dampf mit einem Druck von etwa 4 bis 5 bar gereinigt;
   es wird ein sog. "Bonder" (z.B. CAPBOND® von Leach & Dillon) angewendet und eine thermische Behandlung bzw. ein thermisches Zykeln durchgeführt, z.B. 980°C für 4 min oder 990°C für 2 min oder 1000°C für 1 min;
   Anwenden einer matten Keramik, um das Zwischenelement, welches teilweise hohl ist, auszufüllen;
   thermisches Zykeln bei einer Temperatur von etwa 945° bis 960°C; und
   Anwenden einer glänzenden Keramik; usw.

Weiterhin umfaßt eine Ausführungsform des erfindungsgemäßen Herstellungsverfahren zum Herstellen von verbundenen Zahnkronen, folgende Schritte:
a) Bilden eines negativen Abdruckes des Gebisses bzw. Restgebisses.
b) Anordnen von zumindest zwei Tragelementen 30-1, 30-2, 30-3; 130-1 bis 130-6 einer erfindungsgemäßen Haltevorrichtung in den den Zähnen bzw. Zahnlücken entsprechenden Abschnitten, insbesondere Hohlräumen des negativen Abdruckes.
c) Ausfüllen von Zwischenräumen zwischen dem negativen Abdruck und den Tragelementen 30-1, 30-2, 30-3; 130-1 bis 130-6 mit einem Füllmaterial aus einem erstarrungsfähigen, im erstarrtem Zustand feuerfesten Material, insbesondere mit einer phosphatgebundenen Einbettmasse, zum Bilden eines positiven Abdruckes des Gebisses.
d) Aushärten des Füllmaterials. Gegebenenfalls Entfernung von Ammoniak aus dem Füllmaterial.
e) Entfernen der Tragelementen und des daran verbundenen Füllmaterials d.h. des positiven Abdruckes von dem negativen Abdruck.
f) Bilden von Grundschichten der Kronen auf den positiven Abdrücken der Brückenpfeiler, insbesondere mit einer Grundstruktur aus einer Goldlegierung.
g) Bilden der Kronen auf den Abdrücken der Brückenpfeiler.
h) Verbinden des Kronen, insbesondere durch Schweißen.
i) Vervollständigen der Kronen und der Brücke, insbesondere durch eine Keramikbeschichtung.

Die vorangehenden Verfahrensschritte a) bis i) des Herstellungsverfahren zum Herstellen von verbundenen Zahnkronen können entsprechend den Verfahrensschritten des Herstellungsverfahren zum Herstellen von Brücken abgeändert bzw. ergänzt werden.

## Patentansprüche

1. Haltevorrichtung zur Herstellung von Zahnbrücken oder zum Verbinden von benachbarten Zahnkronen bzw. Onlays bzw. Inlays, welche umfaßt:
- einen Hauptteil (10; 110) und
- mindestens zwei Tragarme (20-1, 20-2, 20-3; 120-1 bis 120-6), welche sich von dem Hauptteil (10; 110) erstrecken,
wobei jeder Tragarm (20-1, 20-2, 20-3; 120-1 bis 120-6) zumindest ein Tragelement (30-1, 30-2, 30-3; 130-1 bis 130-6) umfaßt, welches sich von dem Tragarm (20-1, 20-2, 20-3, 120-1 bis 120-6) unter einem vorbestimmten bzw. vorbestimmbaren Winkel aus der durch die Tragarme (20-1, 20-2, 20-3; 120-1 bis 120-6) bestimmten Fläche erstreckt.

2. Haltevorrichtung gemäß Anspruch 1, wobei die Tragarme (20-1, 20-2, 20-3; 120-1 bis 120-6) zumindest benachbart zu den Tragelementen (30-1, 30-2, 30-3; 130-1 bis 130-6) im wesentlichen einen Querschnitt aufweisen, dessen begrenzende Kurve (K) von einem Kreis abweicht.

3. Haltevorrichtung gemäß einem der vorangehenden Ansprüche, wobei die Tragelemente (30-1, 30-2, 30-3; 130-1 bis 130-6) jeweils zumindest eine Rückhalteeinrichtung (32; 132) umfassen.

4. Haltevorrichtung gemäß einem der vorangehenden Ansprüche, wobei die Tragarme (20-1, 20-2, 20-3; 120-1 bis 120-6) unter einem Winkel, insbesondere senkrecht zu einem insbesondere bogenförmigen Verbindungselement (22; 122) angeordnet sind, welches die Tragarme (20-1, 20-2, 20-3; 120-1 bis 120-6) verbindet.

5. Haltevorrichtung gemäß Anspruch 4, wobei das bogenförmige Verbindungselement (122) zumindest teilweise annäherd dem bogenförmigen Verlauf von Zähnen im Kiefer entspricht.

6. Haltevorrichtung gemäß Anspruch 4 oder 5, wobei das Verbindungselement (22; 122) einstückig mit den Tragarmen (20-1, 20-2, 20-3; 120-1 bis 120-6) ausgebildet ist.

7. Haltevorrichtung gemäß einem der vorangehenden Ansprüche, welche aus einem Material, insbesondere einem Metall bzw. Legierung gebildet ist, dessen Schmelzpunkt oberhalb von etwa 1100°C, bevorzugt oberhalb von etwa 1150°C, am bevorzugtesten oberhalb von etwa 1200°C liegt und/oder das einen niedrigen thermischen Ausdehnungskoeffizienten bzw. Wärmeausdehnung aufweist.

8. Verwendung der Haltevorrichtung nach einem der vorangehenden Ansprüche zur Herstellung von Zahnbrücken und/oder zum Verbinden von benachbarten Zahnkronen bzw. Onlays bzw. Inlays.

9. Herstellungsverfahren zum Herstellen von Zahnbrücken, welches folgende Schritte umfaßt:
a) Bilden eines negativen Abdruckes zumindest eines Teilbereiches des Gebisses bzw. Restgebisses;
b) Anordnen von zumindest zwei Tragelementen (30-1, 30-2, 30-3; 130-1 bis 130-6) einer Haltevorrichtung gemäß einem der vorangehenden Ansprüche 1 bis 7 in den den Zähnen bzw. Zahnlücken entsprechenden Abschnitten, insbesondere den Hohlräumen, des negativen Abdruckes;
c) Ausfüllen von Zwischenräumen zwischen dem negativen Abdruck und den Tragelementen (30-1, 30-2, 30-3; 130-1 bis 130-6) mit einem Füllmaterial aus einem erstarrungsfähigen, im erstarrtem Zustand feuerfesten Material, insbesondere mit einer phosphatgebundenen Einbettmasse, zum Bilden eines positiven Abdruckes des Teilbereiches des Gebisses;
d) Aushärten des Füllmaterials;
e) Entfernen der Tragelemente und des daran verbundenen Füllmaterials d.h. des positiven Abdruckes von dem negativen Abdruck;
f) Anpassen eines für die Brücke zu verwendenden Zwischenelementes an Brückenpfeiler des positiven Abdruckes;
g) Befestigen des Zwischenelementes auf dem positiven Abdruck eines zahnlosen Sattels bzw. Sessels zwischen den Brückenpfeilern, insbesondere an einem Gipsabdruck des Teilbereiches des Gebisses;
h) Bilden von Grundschichten der Kronen auf den positiven Abdrücken der Brückenpfeiler, insbesondere mit einer Grundstruktur aus einer Goldlegierung;
i) Bilden der Kronen auf den Abdrücken der Brückenpfeiler, insbesondere bei entferntem Zwischenelement;
j) erneutes Anordnen des Zwischenelementes zwischen den mit Kronen versehenen positiven Abdrücken der Brückenpfeiler;
k) Verbinden des Zwischenelementes mit den Kronen;
l) Vervollständigen der Kronen und der Brücke, insbesondere durch eine Keramikbeschichtung.

10. Herstellungsverfahren zum Herstellen von verbundenen Zahnkronen bzw. Onlays bzw. Inlays, welches folgende Schritte umfaßt:
a) Bilden eines negativen Abdruckes zumindest eines Teilbereiches des Gebisses bzw. Restgebisses;
b) Anordnen von zumindest zwei Tragelementen (30-1, 30-2, 30-3; 130-1 bis 130-6) einer Haltevorrichtung gemäß einem der vorangehenden Ansprüche 1 bis 7 in den den Zähnen bzw. Zahnlücken entsprechenden Abschnitten, insbesondere Hohlräumen des negativen Abdruckes;
c) Ausfüllen von Zwischenräumen zwischen dem negativen Abdruck und den Tragelementen (30-1, 30-2, 30-3; 130-1 bis 130-6) mit einem Füllmaterial aus einem erstarrungsfähigen, im erstarrtem Zustand feuerfesten Material, insbesondere mit einer phosphatgebundenen Einbettmasse, zum Bilden eines positiven Abdruckes des Teilbereiches des Gebisses;
d) Aushärten des Füllmaterials;
e) Entfernen der Tragelementen und des daran verbundenen Füllmaterials d.h. des positiven Abdruckes von dem negativen Abdruck;
f) Bilden von Grundschichten der Kronen auf den positiven Abdrücken der Brückenpfeiler, insbesondere mit einer Grundstruktur aus einer Goldlegierung;
g) Bilden der Kronen auf den Abdrücken der Brückenpfeiler;
h) Verbinden des Kronen, insbesondere durch Schweißen;
i) Vervollständigen der Kronen, insbesondere durch eine Keramikbeschichtung.

## Claims

1. Holding device for manufacture of dental bridges or for connection of adjacent dental crowns or onlays/inlays, comprising:
- a main part (10; 110) and
- at least two support arms (20-1, 20-2, 20-3; 120-1 to 120-6) which extend from the main part (10; 110) ,
each support arm (20-1, 20-2, 20-3; 120-1 to 120-6) comprising at least one support element (30-1, 30-2, 30-3; 130-1 to 130-6) which extends from the support arm (20-1, 20-2, 20-3; 120-1 to 120-6) at a predetermined or predeterminable angle from the surface defined by the support arms (20-1, 20-2, 20-3; 120-1 to 120-6) .

2. Holding device according to Claim 1, in which the support arms (20-1, 20-2, 20-3; 120-1 to 120-6) have, at least adjacent to the support elements (30-1, 30-2, 30-3; 130-1 to 130-6), essentially a cross section whose delimiting curve (K) deviates from a circle.

3. Holding device according to one of the preceding claims, in which the support elements (30-1, 30-2, 30-3; 130-1 to 130-6) each comprise at least one retention device (32; 132).

4. Holding device according to one of the preceding claims, in which the support arms (20-1, 20-2, 20-3; 120-1 to 120-6) are arranged at an angle to, in particular perpendicular to, an especially arcuate connection element (22; 122) which connects the support arms (20-1, 20-2, 20-3; 120-1 to 120-6).

5. Holding device according to Claim 4, in which the arcuate connection element (122) at least partially corresponds approximately to the arcuate course of the teeth in the jaw.

6. Holding device according to Claim 4 or 5, in which the connection element (22; 122) is designed in one piece with the support arms (20-1, 20-2, 20-3; 120-1 to 120-6).

7. Holding device according to one of the preceding claims, which is made of a material, in particular a metal or alloy, whose melting point lies above approximately 1100°C, preferably above approximately 1150°C, especially preferably above approximately 1200°C, and/or which has a low thermal expansion coefficient or heat expansion.

8. Use of the holding device according to one of the preceding claims for manufacture of dental bridges and/or for connection of adjacent dental crowns or onlays/inlays.

9. Manufacturing method for manufacture of dental bridges, which comprises the following steps:
a) forming a negative impression at least of a partial area of the dentition or residual dentition,
b) arranging at least two support elements (30-1, 30-2, 30-3; 130-1 to 130-6) of a holding device according to one of the preceding claims 1 to 7 in the sections, particularly the cavities, of the negative impression corresponding to the teeth or tooth gaps;
c) filling the interspaces between the negative impression and the support elements (30-1, 30-2, 30-3; 130-1 to 130-6) with a filler material consisting of a solidifiable material, refractory in the solidified state, in particular with a phosphate-bound embedding compound, in order to form a positive impression of the partial area of the dentition;
d) curing the filler material;
e) removing the support elements and the filler material connected thereon, i.e. the positive impression from the negative impression;
f) adapting an intermediate element, which is to be used for the bridge, to bridge abutments of the positive impression;
g) securing the intermediate element on the positive impression of a toothless saddle between the bridge abutments, in particular on a plaster impression of the partial area of the dentition;
h) forming base layers of the crowns on the positive impressions of the bridge abutments, in particular with a base structure consisting of a gold alloy;
i) forming the crowns on the impressions of the bridge abutments, in particular with the intermediate element removed;
j) again arranging the intermediate element between the positive impressions of the bridge abutments provided with crowns;
k) connecting the intermediate element to the crowns;
l) completing the crowns and the bridge, in particular with a ceramic coating.

10. Manufacturing method for manufacture of connected dental crowns or onlays/inlays, which comprises the following steps:
a) forming a negative impression at least of a partial area of the dentition or residual dentition,
b) arranging at least two support elements (30-1, 30-2, 30-3; 130-1 to 130-6) of a holding device according to one of the preceding claims 1 to 7 in the sections, particularly the cavities, of the negative impression corresponding to the teeth or tooth gaps;
c) filling the interspaces between the negative impression and the support elements (30-1, 30-2, 30-3; 130-1 to 130-6) with a filler material consisting of a solidifiable material, refractory in the solidified state, in particular with a phosphate-bound embedding"oil through-path" is constituted by the hollow (i.e. hole) in the knock pin.
compound, in order to form a positive impression of the partial area of the dentition;
d) curing the filler material;
e) removing the support elements and the filler material connected thereon, i.e. the positive impression from the negative impression;
f) forming base layers of the crowns on the positive impressions of the bridge abutments, in particular with a base structure consisting of a gold alloy;
g) forming the crowns on the impressions of the bridge abutments;
h) connecting the crown, in particular by welding;
i) completing the crowns, in particular with a ceramic coating.

## Revendications

1. Dispositif de maintien pour la fabrication de bridges dentaires ou pour la liaison de couronnes dentaires voisines, ou d'incrustations en recouvrement voisines ou d'incrustations voisines, lequel comprend :
- une pièce principale (10 ; 110)
- et au moins deux bras porteurs (20-1, 20-2, 20-3 ; 120-1 à 120-6) qui s'étendent à partir de la pièce principale (10 ; 110),
chaque bras porteur (20-1, 20-2, 20-3 ; 120-1 à 120-6) comprenant au moins un élément porteur (30-1, 30-2, 30-3; 130-1 à 130-6) qui s'étend à partir du bras porteur (20-1, 20-2, 20-3 ; 120-1 à 120-6), hors de la surface déterminée par les bras porteurs (20-1, 20-2, 20-3 ; 120-1 à 120-6), sous un angle déterminé à l'avance, ou susceptible d'être déterminé à l'avance.

2. Dispositif de maintien selon la revendication 1, dans lequel les bras porteurs (20-1, 20-2, 20-3 ; 120-1 à 120-6) présentent, au moins au voisinage des éléments porteurs (30-1, 30-2, 30-3 ; 130-1 à 130-6), sensiblement une section transversale dont la courbe (K) qui la délimite s'écarte de la forme d'un cercle.

3. Dispositif de maintien selon l'une des revendications précédentes, dans lequel les éléments porteurs (30-1, 30-2, 30-3 ; 130-1 à 130-6) comprennent chacun au moins un dispositif (32 ; 132) de maintien arrière.

4. Dispositif de maintien selon l'une des revendications précédentes, dans lequel les bras porteurs (20-1, 20-2, 20-3 ; 120-1 à 120-6) sont disposés sous un certain angle, en particulier perpendiculairement à un élément de liaison (22, 122), dont la forme est en particulier courbe, lequel élément de liaison relie les bras porteurs (20-1, 20-2, 20-3 ; 120-1 à 120-6).

5. Dispositif de maintien selon la revendication 4, dans lequel l'élément de liaison de forme courbe (122) correspond au moins partiellement approximativement à la forme courbe de dents dans la mâchoire.

6. Dispositif de maintien selon la revendication 4 ou 5, dans lequel l'élément de liaison (22 ; 122) forme une seule pièce avec les bras porteurs (20-1, 20-2, 20-3 ; 120-1 a 120-6).

7. Dispositif de maintien selon l'une des revendications précédentes, qui est constitué d'un matériau, en particulier d'un métal ou d'un alliage dont le point de fusion se situe au-dessus d'environ 1100°C, de préférence au-dessus d'environ 1150°C, et très avantageusement au-dessus d'environ 1200°C et/ou qui présente un faible coefficient de dilatation thermique, ou une faible dilatation thermique.

8. Utilisation du dispositif de maintien selon l'une des - revendications précédentes pour la fabrication de bridges dentaires et/ou pour la liaison de couronnes dentaires voisines, ou d'incrustations en recouvrement voisines ou d'incrustations voisines.

9. Procédé de fabrication pour la fabrication de bridges dentaires, qui comprend les étapes suivantes :
a) réalisation d'une empreinte négative d'au moins une zone partielle de la dentition ou de la dentition restante ;
b) mise en place d'au moins deux éléments porteurs (30-1, 30-2, 30-3 ; 130-1 à 130-6) d'un dispositif de maintien selon l'une des revendications précédentes 1 à 7, dans les parties correspondant aux dents, ou aux intervalles entre les dents, en particulier les espaces creux de l'empreinte négative ;
c) remplissage des espaces intermédiaires situés entre l'empreinte négative et les éléments porteurs (30-1, 30-2, 30-3 ; 130-1 à 130-6) au moyen d'un matériau de remplissage constitué d'une matière susceptible de se solidifier et résistante au feu à l'état solidifié, en particulier au moyen d'une masse de moulage liée par un phosphate, pour la réalisation d'une empreinte positive de la zone partielle de la dentition ;
d) durcissement du matériau de remplissage ;
e) séparation des éléments porteurs et du matériau de remplissage solidaire de ceux-ci, c'est-à-dire de l'empreinte positive, d'avec l'empreinte négative ;
f) adaptation d'un élément intermédiaire devant être utilisé pour le bridge, à des supports de bridge de l'empreinte positive ;
g) fixation de l'élément intermédiaire sur l'empreinte positive d'une dépression ou siège exempt de dents, entre les supports de bridge, en particulier sur une empreinte en plâtre de la zone partielle de la dentition ;
h) réalisation de couches de base des couronnes sur les empreintes positives des supports de bridge, en particulier au moyen d'une structure de base en un alliage d'or ;
i) réalisation des couronnes sur les empreintes des supports de bridge, en particulier l'élément intermédiaire étant enlevé ;
j) remise en place de l'élément intermédiaire entre les empreintes positives des supports de bridge, munies de couronnes ;
k) liaison de l'élément intermédiaire avec les couronnes ;
l) finition des couronnes et des bridges, en particulier au moyen d'une couche de matériau céramique.

10. Procédé de fabrication pour la fabrication de couronnes dentaires reliées, ou de couvertures ou d'implants reliés, comprenant les étapes suivantes :
a) réalisation d'une empreinte négative d'au moins une zone partielle de la dentition ou de la dentition restante;
b) mise en place d'au moins deux éléments porteurs (30-1, 30-2, 30-3 ; 130-1 à 130-6) d'un dispositif de maintien selon l'une des revendications précédentes 1 à 7, dans les parties correspondant aux dents, ou aux intervalles entre les dents, en particulier les espaces creux, de l'empreinte négative ;
c) remplissage des espaces intermédiaires entre l'empreinte négative et les éléments porteurs (30-1, 30-2, 30-3 ; 130-1 à 130-6) au moyen d'un matériau de remplissage constitué d'une matière susceptible de se solidifier et résistante au feu à l'état solidifié, en particulier au moyen d'une masse de moulage liée par un phosphate, pour la réalisation d'une empreinte positive de la zone partielle de la dentition ;
d) durcissement du matériau de remplissage ;
e) séparation des éléments porteurs et du matériau de remplissage solidaire de ceux-ci, c'est-à-dire de l'empreinte positive, d'avec l'empreinte négative ;
f) réalisation de couches de base des couronnes sur les empreintes positives des supports de bridge, en particulier au moyen d'une structure de base en un alliage d'or ;
g) réalisation des couronnes sur les empreintes des supports de bridge ;
h) liaison des couronnes, en particulier par soudage ;
i) finition des couronnes, en particulier au moyen d'une couche de matériau céramique.
